# EUROPEAN PATENT APPLICATION

(11) **EP 4 826 379 A1**
(43) Date of publication of application: **21.10.2026**
(21) Application number: 24903570.0
(22) Date of filing: 04.12.2024
(51) Int. Cl.: G01N 31/00, G01N 31/22

(54) **CARBON DIOXIDE GAS DETECTOR**

(30) Priority: 11.12.2023 JP 2023208717
(71) Applicant: MITSUBISHI GAS CHEMICAL COMPANY, INC., Chiyoda-ku Tokyo 100-8324 (JP)
(72) Inventor: ISHII, Haruka, Tokyo 125-8601 (JP); ITOH, Takayoshi, Tokyo 125-8601 (JP)
(74) Representative: Müller-Boré & Partner Patentanwälte PartG mbB
(86) International application number: PCT/JP2024/042780
(87) International publication number: WO 2025/126913

(57) **Abstract**

A carbon dioxide detector including a carrier impregnated with an ink composition, wherein the ink composition contains a pH indicator, an alkaline agent, a water retention agent, a silver antimicrobial agent, and water, and a content of the silver antimicrobial agent is 0.001 to 0.02 mass% based on the total amount of the carbon dioxide detector in terms of silver.

## Description

### Technical Field

The present invention relates to a carbon dioxide detector.

### Background Art

For preservation of foods, beverages, and chemicals that may deteriorate in contact with oxygen, an inert gas not reacting with the content is enclosed in a packaging container. Carbon dioxide is widely used as a gas used for such applications.

In addition, carbon dioxide is also enclosed for preservation of foods, beverages, and chemicals that may deteriorate in quality or lose medicinal effects due to the release of carbon dioxide.

However, due to damage to the packaging container, the internal carbon dioxide concentration may decrease to result in deterioration of the content.

In particular, a bicarbonate-containing chemical solution is a chemical having properties of releasing carbon dioxide to lose the medicinal effect. Therefore, by packaging a container that accommodates bicarbonate-containing chemical solution together with carbon dioxide in a gas-barrier packaging container, preservation is performed while preventing the release of carbon dioxide. However, in the case of occurrence of a pinhole or a sealing defect resulting from defects in packaging material itself, failure in enclosing of the content, transportation such as distribution, or impacts at home or hospital, the atmosphere in a gas flush package changes, which may cause degeneration of the content, or distribution may be performed without noticing the change in the atmosphere in a gas flush package.

As a simple method to prevent such a situation, a detector that detects carbon dioxide is enclosed together with carbon dioxide in the packaging container, and study has been made to more conveniently and accurately identify the presence of carbon dioxide.

For example, in Patent Literature 1, a carbon dioxide detection agent package having a breathable base material as a package of a detection agent that requires no operation for use, with no risk of scattering the content, is disclosed.

Further, in Patent Literature 2, as carbon dioxide detection agent that causes color transition even in a low-concentration carbon dioxide atmosphere to visually determine the generation of carbon dioxide, a carbon dioxide detection agent including a base material impregnated with an alkaline aqueous solution containing a pH indicator and a water retention agent with adjustment such that the pH indicator exhibits an alkaline color, being enclosed in a pouch having a specific moisture vapor transmission rate, is disclosed.

Further, in Patent Literature 3, as a carbon dioxide detection ink composition capable of easily visually identifying the change in color, a carbon dioxide detection ink containing a pH indicator, a binder and a solvent is disclosed.

### Citation List

### Patent Literature

PTL1: JP 2015-219084 A
PTL2: JP 2008-224579 A
PTL3: International Publication No. WO 2001/044385

### Summary of Invention

### Technical Problem

As described above, examples of products enclosed with carbon dioxide for preservation include foods, beverages, and chemicals. The carbon dioxide detector is simultaneously enclosed in packaging containers together with these products. Since these products contain water, there has been a problem in that the generation of mold and the like in the carbon dioxide detector reduces visibility and makes the determination of the change in color of the detector using a pH indicator difficult. In addition, when an antifungal agent or the like is used in the detector to prevent mold, pH may be changed and the antifungal effect may be influenced by pH, which affects the coloration of the pH indicator in the detector. Therefore, there has been desired a carbon dioxide detector that uses a pH indicator, prevents the generation of mold and the like even in use in products such as foods, beverages, and chemicals, and does not affect the change in color and visibility.

In view of the above, an object of the present invention is to provide a carbon dioxide detector having excellent visibility of the change in color and capable of accurately detecting the change in the carbon dioxide concentration, while preventing the generation of mold and the like.

### Solution to Problem

As a result of diligent research in view of the above problem, the present inventors have found that a carbon dioxide detector including a carrier impregnated with an ink composition containing a pH indicator, an alkaline agent, a water retention agent, a specific amount of silver antimicrobial agent and water can solve the problem. As a result, the present invention has been completed.

The present invention provides the following [1] to [12].
[1] A carbon dioxide detector including a carrier impregnated with an ink composition, wherein the ink composition contains a pH indicator, an alkaline agent, a water retention agent, a silver antimicrobial agent, and water, and a content of the silver antimicrobial agent is 0.001 to 0.02 mass% based on the total amount of the carbon dioxide detector in terms of silver.
[2] The carbon dioxide detector according to [1], wherein the silver antimicrobial agent is a supported silver antimicrobial agent in which silver ions are supported on an antimicrobial agent carrier, and the antimicrobial agent carrier is at least one selected from the group consisting of a silicate carrier and a phosphate carrier.
[3] The carbon dioxide detector according to [1] or [2], wherein the pH indicator is metacresol purple.
[4] The carbon dioxide detector according to any one of the [1] to [3], wherein the water retention agent is at least one selected from the group consisting of a polyhydric alcohol, a polyalkylene glycol, an acrylic polymer and cellulose.
[5] The carbon dioxide detector according to any one of [1] to [4], wherein the mass ratio of water to the carrier (water/carrier) is 0.7 to 1.0.
[6] The carbon dioxide detector according to any one of [1] to [5], wherein the mass ratio of water to the water retention agent (water/water retention agent) is 1.2 to 1.9.
[7] The carbon dioxide detector according to any one of [1] to [6], further including a spreading agent.
[8] The carbon dioxide detector according to [7], wherein the spreading agent is silica.
[9] A carbon dioxide detector package including the carbon dioxide detector according to any one of [1] to [8], and a packaging material accommodating the carbon dioxide detector.
[10] A method for producing a carbon dioxide detector, including impregnating a carrier with an ink composition containing a pH indicator, an alkaline agent, a water retention agent, a silver antimicrobial agent and water, followed by mixing with a spreading agent.
[11] A carbon dioxide enclosed package including the carbon dioxide detector according to any one of [1] to [8] or the carbon dioxide detector package according to [9] disposed inside an external package having a carbon dioxide-containing gas enclosed therein.
[12] A method for preserving a bicarbonic acid-containing infusion fluid, including disposing the carbon dioxide detector according to any one of [1] to [8] or the carbon dioxide detector package according to [9], and the bicarbonic acid-containing infusion fluid in an external package having a carbon dioxide-containing gas enclosed therein.

### Advantageous Effects of Invention

According to the present invention, a carbon dioxide detector having excellent visibility of the change in color and capable of accurately detecting the change in the carbon dioxide concentration, while preventing the generation of mold and the like, can be provided.

### Description of Embodiment

### [Carbon dioxide detector]

A carbon dioxide detector of the present invention includes a carrier impregnated with an ink composition, and the ink composition contains a pH indicator, an alkaline agent, a water retention agent, a silver antimicrobial agent, and water, and the content of the silver antimicrobial agent is 0.001 to 0.02 mass% based on the total amount of the carbon dioxide detector in terms of silver.

In the present invention, a "carrier" merely refers to a carrier impregnated with an ink composition, and a carrier supporting silver ions contained in the silver antimicrobial agent described below is referred to as an "antimicrobial agent carrier".

### <Ink composition>

The ink composition contained in the carbon dioxide detector contains a pH indicator, an alkaline agent, a water retention agent, a silver antimicrobial agent, and water.

### (pH Indicator)

The pH indicator is used to detect carbon dioxide. Through utilization of the pH change caused by neutralization reaction of alkali with carbon dioxide, carbon dioxide can be clearly detected even in a low concentration region.

The pH indicator used in the carbon dioxide detector of the present invention is preferably an indicator having a transition interval of neutral to alkaline, more preferably an indicator having a transition interval of pH 7.0 to 10.0, and still more preferably an indicator having a transition interval of pH 7.2 to 9.6. Further, an indicator that changes into a clearly different color is preferred to make a clear determination. Further, an indicator having high thermal stability for use under high temperature is preferred.

Examples of the pH indicator having a transition interval from neutral to alkaline include phenol red, cresol red, curcumin, cyanine, α-naphtholphthalein, metacresol purple, thymol blue, o-cresolphthalein, and phenolphthalein. These can be used alone or in combination of two or more. In the case of using in combination of two or more, it is preferable to combine those that change into similar color.

Among these, the pH indicator is preferably metacresol purple because the transition interval is alkaline, color transition from purple to yellow is caused at pH 9.0, the change in color is large, and the chemical stability is high.

It is preferable that the amount of the pH indicator be an amount that allows the change in color to be visually identified due to definite coloring, being preferably 0.001 to 0.1 mass%, and more preferably 0.005 to 0.05 mass% in the ink composition. Further, the amount in the carbon dioxide detector is preferably 0.0005 to 0.05 mass%, and more preferably 0.001 to 0.01 mass%.

### (Alkaline agent)

Since carbon dioxide is detected by a pH indicator, the ink composition used in the carbon dioxide detector of the present invention contains an alkaline agent.

It is preferable that the alkaline agent be a compound having high solubility in water.

Examples of the alkaline agent include a metal phosphate, a metal hydroxide, a metal silicate, a metal sulfite, and a metal carbonate. A metal phosphate and a metal hydroxide are preferred, and a metal phosphate is more preferred.

A metal phosphate and a metal hydroxide are preferred due to having particularly high solubility in water.

Examples of the metal phosphate include a phosphate of an alkali metal, and trisodium phosphate is preferred.

Examples of the metal hydroxide include a hydroxide of an alkali metal, sodium hydroxide and potassium hydroxide are preferred, and sodium hydroxide is more preferred.

It is preferable that the amount of the alkaline agent be adjusted according to the pH of the aqueous solution thereof, being preferably 0.02 to 1.0 mass%, more preferably 0.1 to 0.5 mass% in the ink composition. Further, the amount in the carbon dioxide detector is preferably 0.01 to 0.5 mass%, and more preferably 0.05 to 0.2 mass%.

### (Water retention agent)

In order to retain water, the ink composition used for the carbon dioxide detector of the present invention contains a water retention agent. The type of the water retention agent is not particularly limited as long as it has an effect of lowering the water activity when added to the carbon dioxide detector, and the following may be suitably used.

The water retention agent is preferably at least one selected from the group consisting of a polyhydric alcohol, a polyalkylene glycol, an acrylic polymer and cellulose, and more preferably a polyhydric alcohol.

Examples of the polyhydric alcohol include glycerin, ethylene glycol, and propylene glycol, and in particular, glycerin is preferred.

Examples of the polyalkylene glycol include polyethylene glycol.

Examples of the acrylic polymer include a polyacrylic acid salt and a polyacrylic acid ester.

The amount of the water retention agent is preferably 10 to 70 mass%, more preferably 20 to 60 mass%, in the ink composition from the viewpoints of rapidly detecting the carbon dioxide concentration and effectively reducing the water activity. Further, the amount in the carbon dioxide detector is preferably 5 to 50 mass%, and more preferably 10 to 40 mass%.

### (Silver antimicrobial agent)

The ink composition used for the carbon dioxide detector of the present invention contains a silver antimicrobial agent, and the content of the silver antimicrobial agent is 0.001 to 0.02 mass% based on the total amount of the carbon dioxide detector in terms of silver.

By containing the silver antimicrobial agent in the above amount in the carbon dioxide detector of the present invention, a carbon dioxide detector having excellent visibility of the change in color and capable of accurately detecting the change in the carbon dioxide concentration, while preventing the generation of mold and the like can be provided.

The silver antimicrobial agent is preferably a supported silver antimicrobial agent in which silver ions are supported on an antimicrobial agent carrier. The carrier in the silver antimicrobial agent is referred to as the "antimicrobial agent carrier".

Examples of the antimicrobial agent carrier supporting silver ions include a silicate carrier and a phosphate carrier. The antimicrobial agent carrier supporting silver ions is at least one selected from the group consisting of a silicate carrier and a phosphate carrier, and is more preferably a silicate carrier.

Examples of the silicate carrier include zeolite, magnesium aluminometasilicate, and calcium silicate, and zeolite is preferred.

Examples of the phosphate carrier include zirconium phosphate and calcium phosphate, and zirconium phosphate is preferred.

Among these, the antimicrobial agent carrier supporting silver ions is preferably at least one selected from the group consisting of zeolite and zirconium phosphate, and from the viewpoint of the safety, zeolite is more preferred.

The content of silver ions in the silver antimicrobial agent is preferably 1 to 20 mass%, more preferably 1 to 15 mass%, still more preferably 1 to 10 mass%, furthermore preferably 1 to 5 mass%, and furthermore preferably 2 to 3 mass% based on the total amount of silver antimicrobial agent.

The content of the silver antimicrobial agent in the carbon dioxide detector is 0.001 to 0.02 mass% based on the total amount of the carbon dioxide detector in terms of silver.

The content of the silver antimicrobial agent in the carbon dioxide detector is preferably 0.0015 to 0.02 mass%, more preferably 0.0015 to 0.01 mass%, still more preferably 0.0015 to 0.009 mass%, furthermore preferably 0.002 to 0.006 mass%, furthermore preferably 0.002 to 0.005 mass%, furthermore preferably 0.002 to 0.004 mass%, and furthermore preferably 0.002 to 0.003 mass% based on the total amount of the carbon dioxide detector in terms of silver.

More specifically, the content of the silver antimicrobial agent in the carbon dioxide detector is preferably 0.0010 to 0.020 mass% based on the total amount of the carbon dioxide detector in terms of silver.

The content of the silver antimicrobial agent in the carbon dioxide detector is preferably 0.0015 to 0.020 mass%, more preferably 0.0015 to 0.010 mass%, still more preferably 0.0015 to 0.0090 mass%, furthermore preferably 0.0020 to 0.0060 mass%, furthermore preferably 0.0020 to 0.0050 mass%, furthermore preferably 0.0020 to 0.0040 mass%, furthermore preferably 0.0020 to 0.0030 mass% based on the total amount of the carbon dioxide detector in terms of silver.

When the content of the silver antimicrobial agent in the carbon dioxide detector falls within the range, a carbon dioxide detector capable of efficiently preventing the generation of mold and the like and having excellent visibility of the change in color can be obtained. Thus, the carbon dioxide detector to be obtained can accurately detect the change in the carbon dioxide concentration. In particular, the carbon dioxide detector to be obtained has excellent visibility of the change in color and can accurately detect the change in the carbon dioxide concentration even after a long term preservation. Further, the carbon dioxide detector to be obtained tends to have an excellent balance between cost and performance.

The amount of the silver antimicrobial agent is preferably 0.002 to 0.04 mass%, more preferably 0.003 to 0.025 mass%, still more preferably 0.003 to 0.02 mass%, furthermore preferably 0.003 to 0.018 mass%, furthermore preferably 0.004 to 0.008 mass%, and furthermore preferably 0.004 to 0.007 mass% based on the total ink composition in terms of silver.

The amount of the silver antimicrobial agent is preferably 0.005 to 2 mass%, more preferably 0.01 to 1 mass%, still more preferably 0.03 to 1 mass%, furthermore preferably 0.03 to 0.5 mass%, furthermore preferably 0.05 to 0.3 mass%, and furthermore preferably 0.05 to 0.2 mass% based on the total amount of the carbon dioxide detector.

The amount of the silver antimicrobial agent is preferably 0.01 to 4 mass%, more preferably 0.02 to 2 mass%, still more preferably 0.05 to 2 mass%, furthermore preferably 0.05 to 1 mass%, furthermore preferably 0.1 to 0.5 mass%, and furthermore preferably 0.1 to 0.3 mass% based on the total amount of the ink composition.

When the amount of the silver antimicrobial agent falls within the range, a carbon dioxide detector capable of efficiently preventing the generation of mold and the like and having excellent visibility of the change in color can be obtained. Thus, the carbon dioxide detector to be obtained can accurately detect the change in the carbon dioxide concentration. In particular, the carbon dioxide detector to be obtained has excellent visibility of the change in color and can accurately detect the change in the carbon dioxide concentration even after a long term storage. Further, the carbon dioxide detector to be obtained tends to have an excellent balance between cost and performance.

### (Water)

The water content is preferably 40 to 75 mass%, and more preferably 50 to 65 mass% in the ink composition from the viewpoint of rapidly detecting the carbon dioxide concentration. Further, the water content in the carbon dioxide detector is preferably 30 to 40 mass%, more preferably 30 to 38 mass%, still more preferably 32 to 38 mass%, and furthermore preferably 32 to 36 mass%.

The mass ratio of water to the water retention agent (water/ water retention agent) is preferably 1.0 to 2.0, more preferably 1.2 to 1.9, from the viewpoint of rapidly detecting the carbon dioxide concentration. With a mass ratio of water to the water retention agent controlled to the range, a uniform carbon dioxide detector can be obtained in production of the carbon dioxide detector. In particular, the sufficiently mixing can be achieved to make a uniform particulate carbon dioxide detector.

The mass ratio of water to the carrier described below (water/carrier) is preferably 0.5 to 2.0, more preferably 0.7 to 1.0, from the viewpoint of rapidly detecting the carbon dioxide concentration and improving the fluidity. With a mass ratio of water to the carrier controlled to the range, color development is improved and filling into a packaging material can be easily performed.

### <Carrier>

The carbon dioxide detector of the present invention includes a carrier impregnated with the ink composition. By impregnating a carrier and forming into a particle shape, excellent fluidity can be obtained.

As the carrier, porous particles are preferred, and in particular, porous inorganic particles are more preferred.

Examples of the porous inorganic particles include silica gel, diatomaceous earth, zeolite, and porous silicates, and porous silicates are preferred.

Among the porous silicates, magnesium aluminometasilicate is preferred due to suitability for use in the fields of foods and pharmaceuticals.

The carrier is preferably colorless or white so that the change in color is clearly identified. The pH of the carrier is preferably neutral to alkaline.

The average particle size of the carrier is preferably 1 to 500 µm, more preferably 100 to 300 µm, from the viewpoints of fluidity and compounding properties.

From the viewpoint of fluidity, the shape of the carrier is preferably spherical or approximately spherical, and more preferably spherical.

The amount of the carrier is preferably 20 to 70 mass%, more preferably 30 to 60 mass%, in the carbon dioxide detector, from the viewpoints of rapidly detecting the carbon dioxide concentration and improving the fluidity.

### <Spreading agent>

It is preferable that the carbon dioxide detector of the present invention contain a spreading agent from the viewpoint of improving fluidity while maintaining the definiteness of the change in color.

It is preferable that the spreading agent adheres to the outer surface of the carrier impregnated with the ink composition.

Examples of the spreading agent include silicon dioxide, calcium silicate hydrate, magnesium oxide, calcium hydroxide, and charcoal. The charcoal is preferably activated charcoal. The silicon dioxide is preferably silica.

The spreading agent is preferably a spherical fine particle, more preferably spherical silica, and still more preferably spherical hydrophobic silica.

The amount of the spreading agent is preferably 0.1 to 5 mass%, more preferably 0.2 to 2 mass% in the carbon dioxide detector from the viewpoint of improving the fluidity.

### [Carbon dioxide detector package]

The carbon dioxide detector package of the present invention includes the carbon dioxide detector, and a packaging material accommodating the carbon dioxide detector.

The carbon dioxide detector is in a particle form with high fluidity, and preferably packed as the carbon dioxide detector package for preservation and use, though being usable as it is depending on the intended use.

Examples of the form of the carbon dioxide detector package include a bag shape and a box shape, and a bag shape is preferred.

As the packaging material used for the carbon dioxide detector package, it is preferable to use a transparent resin film in order to visually identify the change in color from the outside for determination of the presence or absence of carbon dioxide.

Preferred examples of the packaging material include biaxially stretched polypropylene (OPP), unstretched polypropylene (CPP), low density polyethylene (LDPE), linear low density polyethylene (LLDPE), high density polyethylene (HDPE), polyethylene terephthalate (PET), polyvinyl alcohol (PVA), polyvinyl chloride (PVC), polyvinylidene chloride (PVDC), and stretched polyamide (ONY), and these materials may be used alone, or two or more of these materials may be laminated and used. Preferred examples of the laminated packaging material include a laminated film of biaxially stretched polypropylene (OPP) and low density polyethylene (LDPE).

Further, since it is necessary to open a part of the package for contact with an external atmosphere for detection of the carbon dioxide concentration, it is preferable to provide a ventilation hole in a part of the package. It is preferable that the vent allow carbon dioxide to pass through while not allowing the carbon dioxide detector to pass through, being preferably a vent formed of filamentous material or fine porous film, more preferably a vent formed of filamentous material. Examples of the porous film include nonwoven fabric.

A part of the filamentous material exists inside the package (a portion for accommodating the carbon dioxide detector), and another part thereof reaches outside the package. In the case where the filamentous material forms a vent, breathability is achieved through a space between fibers that constitute the filamentous material, or a space between the fibers and a material used for packaging.

The filamentous material may be an aggregate of fibrous material in a filamentous shape, preferably having a melting point of 80°C or more so as to withstand molding of a package. As an example of the filamentous material, a sewing thread is preferably used. Examples of the substance of filamentous material include polyethylene terephthalate, cotton, polyester, vinylon, silk and nylon, and polyethylene terephthalate, and polyethylene terephthalate, nylon and vinylon are preferred. As the thickness of the thread, a yarn count of 1 to 100 is preferred, a yarn count of 10 to 80 is more preferred, and a yarn count of 15 to 60 is still more preferred.

### [Method for producing carbon dioxide detector]

The method for producing the carbon dioxide detector of the present invention is not limited. It is preferable that the carbon dioxide detector is produced by impregnating a carrier with an ink composition containing a pH indicator, an alkaline agent, a water retention agent, a supported silver antimicrobial agent, and water, and it is more preferable that the carbon dioxide detector is produced by impregnating a carrier with an ink composition containing a pH indicator, an alkaline agent, a water retention agent, a supported silver antimicrobial agent, and water, followed by mixing with a spreading agent.

In order to uniformly impregnate the carrier with the ink composition, it is preferable that stirring be performed using a mixer.

Further, in order to allow the spreading agent to uniformly adhere around the carrier, it is preferable that stirring be performed using a mixer.

As the conditions for stirring, it is preferable that stirring be performed at a speed of 10 to 40 rpm.

### [Carbon dioxide enclosed package]

The carbon dioxide enclosed package of the present invention includes the carbon dioxide detector or the carbon dioxide detector package disposed inside an external package having a carbon dioxide-containing gas enclosed therein. In other words, the carbon dioxide enclosed package of the present invention includes a carbon dioxide detector including a carrier impregnated with an ink composition containing a pH indicator, an alkaline agent, a water retention agent, a silver antimicrobial agent, and water, wherein the content of the silver antimicrobial agent is 0.001 to 0.02 mass% based on the total amount of the carbon dioxide detector in terms of silver, or the carbon dioxide detector package, which is disposed in an external package having a carbon dioxide-containing gas enclosed therein.

The carbon dioxide enclosed package of the present invention includes a carbon dioxide-containing gas and the carbon dioxide detector inside the package, that is, inside an external package, and also includes a content such as chemicals and foods in the external package.

It is preferable that the content such as chemicals and foods be further accommodated in a container disposed inside the external package.

It is preferable that the external package used in the carbon dioxide enclosed package of the present invention be made of a gas barrier material through which a carbon dioxide-containing gas hardly passes. Specific examples of the material include a resin film of ethylene-vinyl alcohol copolymer, polyethylene terephthalate or nylon, and a composite film composed of the resin film on which silica, alumina, or the like is vapor-deposited. However, a part or the whole of the external package is transparent in order to visually identify the change in color of the carbon dioxide detector from outside the external package.

The carbon dioxide-containing gas may be composed of carbon dioxide alone, or may be composed of carbon dioxide and an inert gas such as nitrogen gas. The concentration of carbon dioxide in the carbon dioxide-containing gas is preferably 1 to 50%, more preferably 1 to 15%, and still more preferably 3 to 10%.

Examples of the content disposed in the carbon dioxide enclosed package of the present invention include chemicals and foods, and specific examples thereof include chemicals containing a hydrogen carbonate such as sodium hydrogen carbonate, fruits and vegetables, raw meat, and confectionery. In particular, in the case where a bicarbonic acid-containing infusion fluid is used as the chemicals, due to detection of the carbon dioxide concentration in a short time by the carbon dioxide detector, product deterioration can be preferably prevented by early use or by moving into a carbon dioxide atmosphere for preservation.

### [Method for preserving bicarbonic acid-containing infusion fluid]

The method for preserving a bicarbonic acid-containing infusion fluid of the present invention includes disposing the carbon dioxide detector or the carbon dioxide detector package, and a bicarbonic acid-containing infusion fluid inside an external package having a carbon dioxide-containing gas enclosed therein. In other words, the method for preserving a bicarbonic acid-containing infusion fluid of the present invention includes disposing the carbon dioxide detector including a carrier impregnated with an ink composition containing a pH indicator, an alkaline agent, a water retention agent, a supported silver antimicrobial agent, and water, wherein the content of the supported silver antimicrobial agent is 0.001 to 0.02 mass% based on the total amount of the carbon dioxide detector in terms of silver, or the carbon dioxide detector package, and a bicarbonic acid-containing infusion fluid, in an external package having a carbon dioxide-containing gas enclosed therein.

The bicarbonic acid-containing infusion fluid (bicarbonate-containing infusion fluid) is used as an extracellular fluid replenisher for compensating an extracellular fluid using bicarbonate ions as alkalizing agent. The bicarbonic acid-containing infusion fluid (bicarbonate-containing infusion fluid) has properties of releasing carbon dioxide to lose the medicinal effect. Therefore, by packaging the container containing the bicarbonic acid-containing infusion fluid (bicarbonate-containing infusion fluid) together with carbon dioxide in a gas barrier packaging container, the release of carbon dioxide is prevented to achieve preservation.

In the case where the bicarbonic acid-containing infusion fluid is preserved in a carbon dioxide-containing gas, use of the carbon dioxide detector allows decrease in the concentration of carbon dioxide in the gas to be detected in a short time, so that the bicarbonic acid-containing infusion fluid, which tends to be easily deteriorated, can be used up in an early stage, or can be preserved again in a carbon dioxide atmosphere. Thus, the deterioration of the bicarbonic acid-containing infusion fluid can be efficiently prevented.

As the external package used in the preservation method of the present invention, it is preferable to use an external package that can be suitably used for the carbon dioxide enclosed package described above. Specifically, it is preferable that the material be made of a gas barrier material through which a carbon dioxide-containing gas hardly passes. Specific examples thereof include a resin film of ethylene-vinyl alcohol copolymer, polyethylene terephthalate and nylon, and a composite film composed of the resin film on which silica, alumina, or the like is vapor-deposited.

The carbon dioxide-containing gas is preferably composed of carbon dioxide and nitrogen gas. The concentration of carbon dioxide in the carbon dioxide-containing gas is preferably 1 to 50%, more preferably 1 to 15%, still more preferably 3 to 10%.

The preservation temperature in the preservation method of the present invention is preferably 5 to 40°C.

The preservation method of the present invention exhibits a higher effect when moving or transporting a bicarbonic acid-containing infusion fluid. In other words, a method for moving or transporting a bicarbonic acid-containing infusion fluid including disposing the carbon dioxide detector and a bicarbonic acid-containing infusion fluid in an external package having a carbon dioxide-containing gas enclosed therein is also preferred.

When the bicarbonic acid-containing infusion fluid is moved or transported, the external package is easily subject to damage that cannot be visually identified due to external stimulus or impact from the outside. Use of the carbon dioxide detector is preferred because it allows decrease in the concentration of carbon dioxide to be detected even after preservation in a short time, so that the bicarbonic acid-containing infusion fluid in a damaged external package can be used up in an early stage, or can be preserved again in a carbon dioxide atmosphere. Thus, the deterioration of the bicarbonic acid-containing infusion fluid can be efficiently prevented.

### Examples

Hereinafter, the present invention will be described in more detail with reference to Examples and Comparative Examples, though the present invention is not limited to these Examples.

### [Evaluation]

The carbon dioxide detectors obtained in Examples and Comparative Examples were evaluated as follows.

### <Antimicrobial properties and appearance after storage of carbon dioxide detector>

### (Preparation of carbon dioxide detector package)

In a bag (with ventilation threads) made of transparent laminated film of OPP/LLDPE with a size of 2.5 cm by 3.0 cm, 0.2 g of the carbon dioxide detector obtained in Examples and Comparative Examples was placed in, and the opening was hermetically heat-sealed to obtain a package of the carbon dioxide detector.

### (Test method)

### [1] Evaluation of antimicrobial properties

A fungus of the genus Cladosporium was attached to 0.2 g of the carbon dioxide detector obtained in Examples and Comparative Examples, and the carbon dioxide detector was stored at 25°C for 1 month. Then, the carbon dioxide detector after storage was inoculated on a PDA medium. The PDA medium after inoculation was cultured at 25°C for 5 days, and then colonies were counted. The fewer the number of colonies, the better the antimicrobial properties. The following evaluation was carried out based on the number of colonies, and A was determined as acceptable.

In the carbon dioxide detector having excellent antimicrobial properties, mold was not found even after storage, the appearance after storage is excellent, and the visibility of the change in color along with the change in the carbon dioxide concentration was excellent. Although the number of colonies was not counted in Example 1, no mold was generated on the appearance of the carbon dioxide detector after storage, and thus, Example 1 was determined as A by the following evaluation criteria.

### (Evaluation criteria)

A: Number of colonies of less than 500
B: Number of colonies of 500 or more and less than 1500
C: Number of colonies of 1500 or more

### [2] Evaluation of appearance of carbon dioxide detector after storage

### (Production of carbon dioxide detector package)

In a bag (with ventilation threads) made of transparent film of OPP/LLDPE with a size of 2.5 cm by 3.0 cm, 0.2 g of the carbon dioxide detector obtained in Examples and Comparative Examples was placed in, and the opening was hermetically heat-sealed to obtain a package of the carbon dioxide detector.

### (Storage and evaluation of package of carbon dioxide detector)

The package of the carbon dioxide detector was placed in a bag made of gas barrier film having a capacity of 250 mL, the opening of the gas barrier film bag was hermetically heat-sealed and preserved, and the appearances of the carbon dioxide detector after a lapse of 2 weeks and after a lapse of 6 weeks were observed. The appearances of the carbon dioxide detector after a lapse of 2 weeks and after a lapse of 6 weeks were compared with the appearance of the carbon dioxide detector immediately after preservation, and the generation timing of a black aggregate and the proportion of the black aggregate after a lapse of 6 weeks were evaluated. The proportion of the black aggregate after a lapse of 6 weeks was evaluated by the following criteria. In Table 1, the carbon dioxide detector in which no black aggregate was generated even after a lapse of 6 weeks was described as "no generation of aggregate". The later the generation of the black aggregate and the lower the proportion of the black aggregate, the better the appearance after storage. The carbon dioxide detector in which no black aggregate was generated has a better appearance after storage and significantly excellent visibility of the change in color along with the change in the carbon dioxide concentration.

In the carbon dioxide detector of Examples, no change in color of the carbon dioxide detector itself was observed before preservation and after a lapse of 6 weeks, and it was demonstrated that the use of the silver antimicrobial agent did not affect the coloration of the carbon dioxide detector. Consequently, it can be seen that the carbon dioxide detector of the present invention enables accurate detection.

### (Evaluation criteria)

A: No black aggregate is observed (0%)
B: The proportion of the black aggregate is more than 0% and less than 30%
C: The proportion of the black aggregate is 30% or more and less than 50%
D: The proportion of the black aggregate is 50% or more and less than 70%
E: The proportion of the black aggregate is 70% or more and less than 90%
F: The proportion of the black aggregate is 90% or more

### [Carbon dioxide detector]

### Example 1

Into 83 g of distilled water, 0.016 g of metacresol purple as pH indicator, 0.25 g of trisodium phosphate dodecahydrate as alkaline agent, and 59.5 g of glycerin as water retention agent, and 0.12 g of Zeomic (antimicrobial agent carrier: zeolite, silver content: 2.5 mass%, manufactured by Sinanen Zeomic Co., Ltd.) as a silver antimicrobial agent were mixed to obtain a purple ink composition. Magnesium aluminometasilicate (trade name: Neucilin SG2, average particle size: about 200 µm) in amount of 100 g as carrier was impregnated with the ink composition, and 0.75 g of hydrophobic silica as a spreading agent was added thereto. The mixture was stirred to obtain a purple carbon dioxide detector. The evaluation results are shown in Table 1.

### Examples 2 to 6 and Comparative Examples 1 to 5

A purple carbon dioxide detector was obtained in the same manner as in Example 1, except that the kind and amount of silver antimicrobial agent was changed as shown in Table 1. The evaluation results are shown in Table 1.

### Comparative Example 6

A purple carbon dioxide detector was obtained in the same manner as in Example 1, except that no a silver antimicrobial agent was used. The evaluation results are shown in Table 1.

### [Table 1]

**[Table 1]**

| | | | Example | | | | | | Comparative Example | | | | | |
|---|---|---|---|---|---|---|---|---|---|---|---|---|---|---|
| | | | 1 | 2 | 3 | 4 | 5 | 6 | 1 | 2 | 3 | 4 | 5 | 6 |
| Ink (g) | pH indicator | Metacresol purple | 0.016 | 0.016 | 0.016 | 0.016 | 0.016 | 0.016 | 0.016 | 0.016 | 0.016 | 0.016 | 0.016 | 0.016 |
| | Alkaline agent | Trisodium phosphate dodecahydrate | 0.25 | 0.25 | 0.25 | 0.25 | 0.25 | 0.25 | 0.25 | 0.25 | 0.25 | 0.25 | 0.25 | 0.25 |
| | Water retention agent | Glycerin | 59.5 | 59.5 | 59.5 | 59.5 | 59.5 | 59.5 | 59.5 | 59.5 | 59.5 | 59.5 | 59.5 | 59.5 |
| | Water | Water | 83 | 83 | 83 | 83 | 83 | 83 | 83 | 83 | 83 | 83 | 83 | 83 |
| | Antimicrobial agent | Zeomic (manufactured by Sinanen Zeomic Co., Ltd.) | 0.12 | 0.24 | - | - | - | 1.20 | 2.40 | - | - | - | - | - |
| | | silver content: 2.5 mass% | | | | | | | | | | | | |
| | | antimicrobial agent carrier: zeolite | | | | | | | | | | | | |
| | | NOVARON AG300 (manufactured by TOAGOSEI CO., LTD.) | - | - | 0.24 | - | - | - | - | 2.40 | - | - | - | - |
| | | silver content: 4 mass% | | | | | | | | | | | | |
| | | antimicrobial agent carrier: hexagonal zirconium phosphate | | | | | | | | | | | | |
| | | NOVARON AG1100 (manufactured by TOAGOSEI CO., LTD.) | - | - | - | 0.24 | - | - | - | - | 1.20 | 2.40 | - | - |
| | | silver content: 10 mass% | | | | | | | | | | | | |
| | | antimicrobial agent carrier :hexagonal zirconium phosphate | | | | | | | | | | | | |
| | | NOVARON AGZ330 (manufactured by TOAGOSEI CO., LTD.) | - | - | - | - | 0.24 | - | - | - | - | - | 2.40 | - |
| | | silver content: 3 mass% | | | | | | | | | | | | |
| | | antimicrobial agent carrier: hexagonal zirconium phosphate | | | | | | | | | | | | |
| | | Amount in terms of silver | 0.0030 | 0.0060 | 0.0096 | 0.0240 | 0.0072 | 0.0300 | 0.0600 | 0.0960 | 0.1200 | 0.2400 | 0.0720 | 0.0000 |
| Carrier (g) | | Mg aluminometasilicate | 100 | 100 | 100 | 100 | 100 | 100 | 100 | 100 | 100 | 100 | 100 | 100 |
| Spreading agent (g) | | Hydrophobic silica | 0.75 | 0.75 | 0.75 | 0.75 | 0.75 | 0.75 | 0.75 | 0.75 | 0.75 | 0.75 | 0.75 | 0.75 |
| Carbon dioxide detector (mass%) | | Content of silver antimicrobial agent | 0.05 | 0.10 | 0.10 | 0.10 | 0.10 | 0.49 | 0.98 | 0.98 | 0.49 | 0.98 | 0.98 | 0.00 |
| | | Content of the silver antimicrobial agent in terms of silver | 0.0012 | 0.0025 | 0.0039 | 0.0098 | 0.0030 | 0.0123 | 0.0244 | 0.0390 | 0.0490 | 0.0976 | 0.0293 | 0.0000 |
| Evaluation | Antimicrobial properties | Number of colonies after 1 month | - | 319 | 317 | 288 | 132 | 206 | 157 | 242 | 21 | 4 | 63 | 1881 |
| | | Evaluation | A | A | A | A | A | A | A | A | A | A | A | C |
| | Appearance of carbon dioxide detector after storage (generation timing of aggregate) | | No generation of aggregate | No generation of aggregate | No generation of aggregate | No generation of aggregate | No generation of aggregate | No generation of aggregate | After 2 weeks | After 2 weeks | After 2 weeks | After 2 weeks | After 2 weeks | No generation of aggregate |
| | Proportion of the black aggregate after 6 weeks | | A | A | A | A | A | A | C | D | E | F | C | A |

As shown in Table 1, the generation of black mold was prevented and no aggregate was observed also after preservation, in the carbon dioxide detectors of Examples, so that it can be seen that they have excellent visibility of the change in color even after preservation. Thus, it can be seen that the carbon dioxide detector of the present invention has excellent visibility of the change in color and capable of accurately detecting the change in the carbon dioxide concentration, while preventing the generation of mold and the like.

## Claims

1. A carbon dioxide detector comprising a carrier impregnated with an ink composition, wherein
the ink composition comprises a pH indicator, an alkaline agent, a water retention agent, a silver antimicrobial agent, and water, and
a content of the silver antimicrobial agent is 0.001 to 0.02 mass% based on the total amount of the carbon dioxide detector in terms of silver.

2. The carbon dioxide detector according to claim 1, wherein the silver antimicrobial agent is a supported silver antimicrobial agent in which silver ions are supported on an antimicrobial agent carrier, and the antimicrobial agent carrier is at least one selected from the group consisting of a silicate carrier and a phosphate carrier.

3. The carbon dioxide detector according to claim 1 or 2, wherein the pH indicator is metacresol purple.

4. The carbon dioxide detector according to any one of the claims 1 to 3, wherein the water retention agent is at least one selected from the group consisting of a polyhydric alcohol, a polyalkylene glycol, an acrylic polymer and cellulose.

5. The carbon dioxide detector according to any one of claims 1 to 4, wherein the mass ratio of water to the carrier (water/carrier) is 0.7 to 1.0.

6. The carbon dioxide detector according to any one of claims 1 to 5, wherein the mass ratio of water to the water retention agent (water/ water retention agent) is 1.2 to 1.9.

7. The carbon dioxide detector according to any one of claims 1 to 6, further comprising a spreading agent.

8. The carbon dioxide detector according to claim 7, wherein the spreading agent is silica.

9. A carbon dioxide detector package comprising the carbon dioxide detector according to any one of claims 1 to 8, and a packaging material accommodating the carbon dioxide detector.

10. A method for producing a carbon dioxide detector, comprising impregnating a carrier with an ink composition comprising a pH indicator, an alkaline agent, a water retention agent, a silver antimicrobial agent and water, followed by mixing with a spreading agent.

11. A carbon dioxide enclosed package comprising the carbon dioxide detector according to any one of claims 1 to 8 or the carbon dioxide detector package according to claim 9 disposed inside an external package having a carbon dioxide-containing gas enclosed therein.

12. A method for preserving a bicarbonic acid-containing infusion fluid, comprising disposing the carbon dioxide detector according to any one of claims 1 to 8 or the carbon dioxide detector package according to claim 9, and the bicarbonic acid-containing infusion fluid in an external package having a carbon dioxide-containing gas enclosed therein.
